# EUROPEAN PATENT SPECIFICATION

(11) **EP 3 046 024 B1**
(45) Date of publication and mention of the grant of the patent: **03.07.2019**
(21) Application number: 15464003.1
(22) Date of filing: 15.01.2015
(51) Int. Cl.: G06F 21/81, G06F 9/4401, G09C 1/00, H04L 29/06, H04L 9/08, H04L 9/32, G06F 21/57

(54) **Method of operating a system on chip comprising a bootable processor**
Verfahren zum Betrieb eines Systems auf einem Chip mit bootfähigem Prozessor
Procédé de fonctionnement d'un système sur puce comprenant un processeur amorçable

(43) Date of publication of application: 20.07.2016
(73) Proprietor: Siemens Aktiengesellschaft, 80333 München (DE)
(72) Inventor: Pitu, Ciprian-Leonard, 500371 Brasov (RO)
(74) Representative: Maier, Daniel Oliver

(56) References cited:
- WO-A2-2012/099657
- US-A1- 2013 019 105

## Description

The invention relates to a method of operating a system on chip comprising a bootable processor. The invention also relates to a system on chip for implementing the method.

A system on chip (SoC) is an integrated circuit that integrates components of a computer or other electronic system into a single chip. It can be subject to attacks during which original software is replaced or changed.

Currently there are different approaches for securing memory content. A well known solution is data encryption, whereas the memory's content is encrypted and cannot be decrypted without the correct key. The same key is used to encrypt any firmware loaded on-chip. If the key leaks or if the SoC's storage is read out this type of protection becomes obsolete.

The publication US 2013/019105 A1 for example relates to a method for associating software like program codes with original equipment manufacturer (OEM) hardware equipment by using symmetric and asymmetric cryptography. Critical security information (e.g. encryption key) associated with the equipment is stored in encrypted form - using a unique secret value - in a memory and can be loaded from the memory at start-up time. The secret value is used to retrieve the respective chip specific encryption key and the respective authentication keys to associate program code with OEM equipment. But if the secret value stored in the equipment leaks or the storage is read out, the encryption and/or authentication keys may misused and these security measure may be overcome.

The publication WO 2012/099657 A2 relates to intrinsic security, which relies on physical features of a silicon device. These features are used to uniquely characterise the device. By using this method the manufacturing imperfections are exploited yielding a device-unique identification characteristic which can be used to derive a cryptographic key. This solution is highly secure, but requires extensive engineering and resources.

It is an object of the invention to provide an improved method for protecting confidential information on a system on chip.

The invention provides a method of operating a system on chip comprising a bootable processor, the method comprising the steps of:
- executing a bootloader and measuring electrical power consumed by the processor during booting
- converting the measured electrical power into power trace digital data and generating unique power characteristic data out of the power trace digital data;
- verifying the unique power characteristic data; and
- reconstructing a device key out of the unique power characteristic data and the helper data, wherein averaged power characteristic data measured during an enrolment phase and the device key provided by a manufacturer are used for generation of the helper data during the enrolment phase; and after reconstructing the device key decrypting software, which is encrypted with the device key and stored on memory; and executing the decrypted software.

The measured power trace of the processor constitutes a unique signature of the SoC device running specified software. Thus, the solution secures the running software by itself. There are no on-chip stored secrets; from the helper data alone there is no possibility to compute the device key respectively encryption key or the power characteristic data.

In a preferred embodiment of the method the verification of the unique power characteristic data is performed by comparing a check sum of the derived power characteristic data with a check sum generated during enrolment of the system on chip. This validation of the power characteristics instantly reveals an interference of the bootloader.

In case of falsification a reset signal is generated in order to reset the processor. Thus, an attack stops before memory data can be read out.

Furthermore, it is advantageous, if the bootloader is re-executed after reset of the processor for a determined number of repetitions. In case of a singular problem this measure allows normal operation of the SoC after an automatic restart.

If a problem endures, it is advantageous, if the SoC is blocked after executing the determined number of repetitions. Thus, no further manipulations respectively attacks are possible.

As an optional measure a security alarm is reported after executing the determined number of repetitions. Additionally, for a high risk application it is advantageous, if the memory of the SoC is erased after executing the determined number of repetitions. This prevents any type of unauthorised access to secure data.

During enrolment of the SoC, booting is preferably executed in a loop in order to obtain a number of samples of the measured electrical power consumed by the processor. This data collection allows a better verification of the power characteristic data (after enrolment).

A proposed system on chip, which is set up to implement one of the methods described above, comprises a processor unit, which comprises: a processor as such; an ADC for converting a measured power trace into digital data; a power characterisation module for generating a power characteristic data out of the power trace digital data; an enrolment module for generating helper data during an enrolment phase based on averaged power characteristic data and a device key provided by a manufacturer; a storage to store helper data and validation data, which is a check sum of the power characteristic data; and a trace validator and key reconstructor module for validating the power characteristic data and for reconstructing the device key out of the unique power characteristic data and the helper data generated during the enrolment phase; and means for decrypting software stored encrypted with the device key on memory (5) and for executing the decrypted software.

By adding basic hardware components, inaccessible for the end-users, the software running on the SoC is characterised by the power trace. The analog-to-digital converter (ADC) and the power characterisation module achieve a fast and easy enrolment and reconstruction of the power characteristics.

The boot process is not hindered or slowed down as the power characteristics are generated in parallel with the bootloader being executed.

Furthermore, the enrolment module is physically disabled subsequent to the generation of the helper data.

These and other aspects and advantages will become more apparent and more readily appreciated from the following description of the exemplary embodiments, taken in conjunction with the accompanying drawings of which:
- Fig. 1: is a SoC device structure
- Fig. 2: is a processor unit of fig. 1
- Fig. 3: is a block diagram of an enrolment process
- Fig. 4: is a block diagram of a reconstruction process

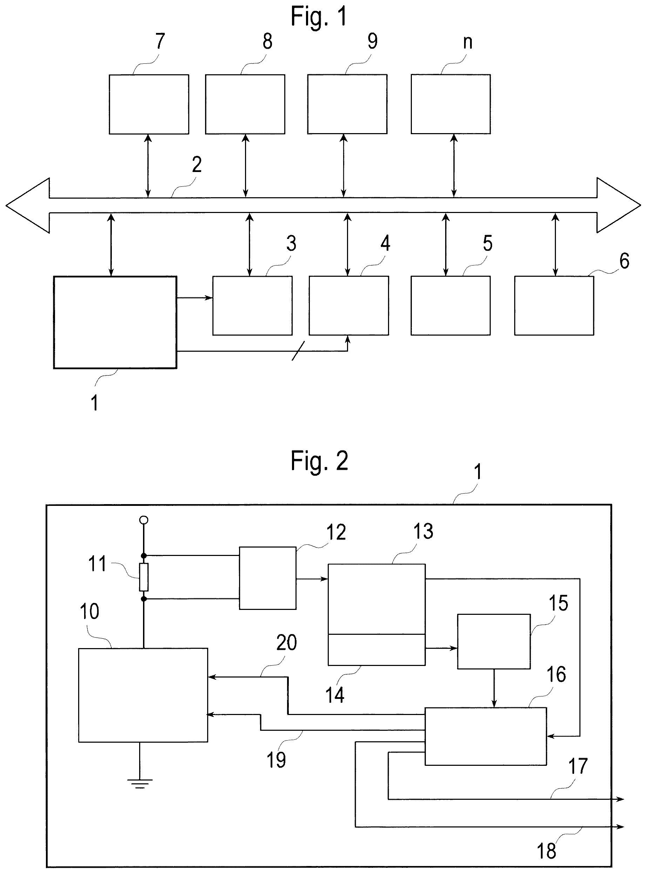

Figure 1 shows a SoC device with a processor unit 1, which is connected to a system bus 2. Additionally, a clock and reset unit 3 and a memory controller 4 are connected to the processor unit 1 and to the system bus 2. Further components of the SoC are a memory 5, a DMA controller 6 and diverse peripheral components 7, 8, 9...n, which are also connected to the system bus 2.

The processor unit 1 is shown in detail in figure 2. It comprises the processor 10 as such, which is connected to a power source via a shunt resistance 11. The voltage drop at the shunt resistance 11 is measured by an ADC 12, which converts the measured power trace into digital data. The ADC measures only the power consumption of the processor 10.

Furthermore, a power characterisation module 13 generates power characteristic data out of the power trace digital data. Thus, the power characterisation module 13 evaluates Furthermore, a power characterisation module 13 generates power characteristic data out of the power trace digital data. Thus, the power characterisation module 13 evaluates the power trace and determines a chip-unique pattern, which reflects the executed software and the physical characteristics of the particular device that is executing the software.

Attached to the power characterisation module 13 an enrolment module 14 is used during the enrolment phase. It generates helper data, using the power characteristic data and an encryption key provided by the manufacturer. The helper data is stored in a non-volatile storage 15.

For the reconstruction phase a trace validator and key reconstructor module 16 is arranged. It receives the power characteristic data from the power characterisation module 13 and reads the stored helper data in order to reconstruct the original key.

If the power characteristic data is valid, the trace validator and key reconstructor module 16 sends a system-validate-signal 17 to the clock and reset module 3 and the reconstructed device key 18 to the memory controller 4. Additionally, an execution-enable-signal 19 is sent to the processor 10.

In case of a falsification the trace validator and key reconstructor module 16 sends a reset-signal 20 to the processor 10. For this purpose check sum verification is performed.

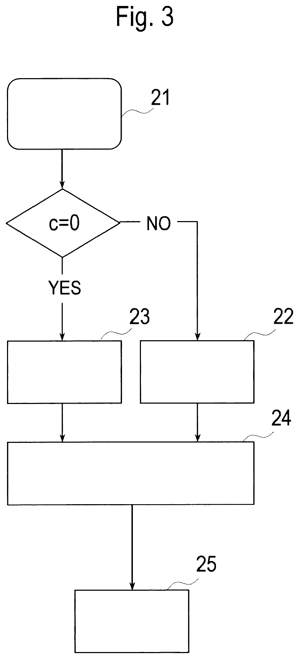

During enrolment, which is shown in figure 3, the manufacturer of the SoC or a software developer loads the bootloader on-chip. Enrolment 21 starts with triggering the enrolment module 14. As a result the processor 10 executes the bootloader in loop. For this purpose a counter c is used. Each time the bootloader is executed power characterisation 22 takes place. Power trace is measured by the ADC 12 and processed by the power characterisation module 13.

At the end of the enrolment phase, when the enrolment counter c is equal zero, the enrolment module 14 executes the enrolment process 24 as such. The averaged power characteristic data and a provided device key 23 are used to generate the helper data. Storing 25 of the helper data is the last step before the enrolment module 14 is disabled physically.

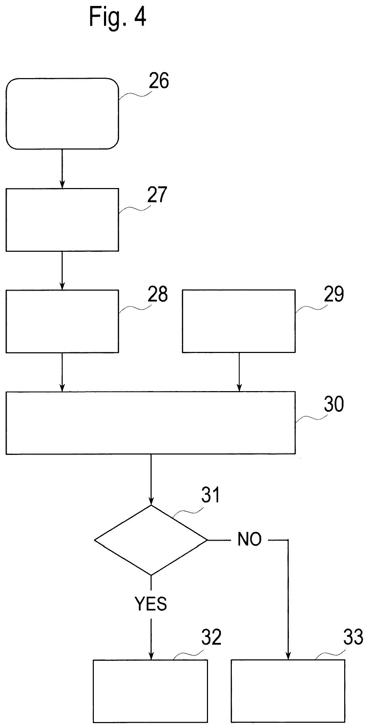

Normal operation is shown in figure 4. The SoC is powered on and reconstruction 26 starts with the execution 27 of the bootloader. The boot process is the first step in starting a silicon device and is executed directly after power-on. It initializes the SoC into a pre-defined state, allowing it to further load more complex software. Therefore, the first security problem is the bootloader; if it gets compromised, then the pyramid of trust cannot be set up.

The ADC 12 measures the power trace and the power characterisation module 13 generates the power characteristic data. Parallel to this generation 28 of the power characteristic data the reading 29 of the helper data is performed. During the reconstruction process 30 as such the trace validator and key reconstructor module 16 uses the power characteristic data and the helper data to validate the executed bootloader and to generate the device key. The validation 31 either results in decrypting and executing 32 software or in resetting 33 the processor 10.

If the power characteristic data is valid, the execution of the software is also validated by using the power characteristic data and the helper data respectively the device key.

In case of a mismatch, due to security attacks (e.g. changed bootloader, changed instruction or code sequences inside the original bootloader, etc.), the trace validator and key reconstructor module 16 resets the processor 10 and re-executes the bootloader.

After a number of unsuccessful bootloader executions different actions take place, depending on the desired strategy. These actions could be preventing the SoC from starting up, reporting security alarms, erasing the entire memory, etc.

## Claims

1. A method of operating a system on chip comprising a bootable processor (10), the method comprising the steps of:
executing a bootloader and measuring electrical power consumed by the processor (10) during booting;
converting the measured electrical power into power trace digital data and generating unique power characteristic data out of the power trace digital data;
verifying the unique power characteristic data;
reconstructing a device key out of the unique power characteristic data and the helper data, wherein averaged power characteristic data measured during an enrolment phase (21) and the device key provided by a manufacturer are used for generation of the helper data during the enrolment phase (21); and
after reconstructing the device key decrypting software, which is encrypted with the device key and stored on memory (5); and executing the decrypted software.

2. The method according to claim 1, whereas the verification of the unique power characteristic data is performed by comparing a check sum of the derived power characteristic data with a check sum generated during enrolment (21) of the system on chip.

3. The method according to claim 2, whereas in case of falsification a reset signal is generated in order to reset the processor (10).

4. The method according to claim 3, whereas the bootloader is re-executed after reset of the processor (10) for a determined number of repetitions.

5. The method according to claim 4, whereas the system on chip is blocked after executing the determined number of repetitions.

6. The method according to claim 4 or 5, whereas a security alarm is reported after executing the determined number of repetitions.

7. The method according to any one of claims 4-6, whereas the memory (5) of the system on chip is erased after executing the determined number of repetitions.

8. The method according to any one of claims 1-7, whereas during enrolment (21) of the system on chip booting is executed in a loop in order to obtain a number of samples of the measured electrical power consumed by the processor (10).

9. A system on chip, which is set up to implement the method as claimed in one of claims 1 to 8, with a processor unit (1) comprising:
a processor (10) as such;
an ADC (12) for converting a measured power trace into digital data;
a power characterisation module (13) for generating power characteristic data out of the power trace digital data;
an enrolment module (14) for generating helper data during an enrolment phase based on averaged power characteristic data and a device key provided by a manufacturer;
a storage (15) to store helper data and validation data, which is a check sum of the power characteristic data;
a trace validator and key reconstructor module (16) for validating the power characteristic data and for reconstructing the device key out of the unique power characteristic data and the helper data generated during the enrolment phase; and
means for decrypting software stored encrypted with the device key on memory (5) and for executing the decrypted software.

10. The system on chip according to claim 9, whereas the processor unit (1) is connected to a system bus (2), a clock and reset unit (3) and a memory controller (4).

11. The system on chip according to claim 9 or 10, in which the enrolment module (14) is physically disabled subsequent to the generation of the helper data.

## Patentansprüche

1. Verfahren zum Betrieb eines Systems auf einem Chip mit einem bootfähigen Prozessor (10), wobei das Verfahren die folgenden Schritte umfasst:
Ausführen eines Startladeprogramms und Messen der von dem Prozessor (10) während des Bootens verbrauchten elektrischen Leistung,
Umwandeln der gemessenen elektrischen Leistung in digitale Leistungsverlaufsdaten und Erzeugen eindeutiger Leistungskenndaten aus den digitalen Leistungsverlaufsdaten,
Verifizieren der eindeutigen Leistungskenndaten,
Rekonstruieren eines Geräteschlüssels aus den eindeutigen Leistungskenndaten und den Helferdaten, wobei während einer Registrierungsphase (21) gemessene gemittelte Leistungskenndaten und der von einem Hersteller bereitgestellte Geräteschlüssel für die Erzeugung der Helferdaten während der Registrierungsphase (21) verwendet werden, und
nach dem Rekonstruieren des Geräteschlüssels Entschlüsseln der Software, die mit dem Geräteschlüssel verschlüsselt und im Speicher (5) gespeichert ist, und Ausführen der entschlüsselten Software.

2. Verfahren nach Anspruch 1, wobei die Verifizierung der eindeutigen Leistungskenndaten durch Vergleichen einer Prüfsumme der abgeleiteten Leistungskenndaten mit einer während der Registrierung (21) des Systems auf einem Chip erzeugten Prüfsumme vorgenommen wird.

3. Verfahren nach Anspruch 2, wobei im Fall einer Falsifizierung ein Rücksetzsignal erzeugt wird, um den Prozessor (10) zurückzusetzen.

4. Verfahren nach Anspruch 3, wobei das Startladeprogramm nach dem Rücksetzen des Prozessors (10) erneut ausgeführt wird, bis eine festgelegte Anzahl von Wiederholungen erreicht ist.

5. Verfahren nach Anspruch 4, wobei das System auf einem Chip nach Ausführen der festgelegten Anzahl von Wiederholungen gesperrt wird.

6. Verfahren nach Anspruch 4 oder 5, wobei nach Ausführen der festgelegten Anzahl von Wiederholungen ein Sicherheitsalarm gemeldet wird.

7. Verfahren nach einem der Ansprüche 4 bis 6, wobei der Speicher (5) des Systems auf einem Chip nach Ausführen der festgelegten Anzahl von Wiederholungen gelöscht wird.

8. Verfahren nach einem der Ansprüche 1 bis 7, wobei während der Registrierung (21) des Systems auf einem Chip das Booten in einer Schleife ausgeführt wird, um eine Anzahl von Stichproben der gemessenen von dem Prozessor (10) verbrauchten elektrischen Leistung zu erhalten.

9. System auf einem Chip, das eingerichtet ist, das Verfahren nach einem der Ansprüche 1 bis 8 umzusetzen, mit einer Prozessoreinheit (1), die Folgendes umfasst:
einen Prozessor (10) als solchen,
einen Analog-Digitalwandler (12) zum Umwandeln gemessener Leistungsverläufe in digitale Daten,
ein Leistungscharakterisierungsmodul (13) zum Erzeugen von Leistungskenndaten aus den digitalen Leistungsverlaufsdaten,
ein Registrierungsmodul (14) zum Erzeugen von Helferdaten während einer Registrierungsphase basierend auf gemittelten Leistungskenndaten und einem von einem Hersteller bereitgestellten Geräteschlüssel,
einen Speicher (15) zum Speichern von Helferdaten und Validierungsdaten, bei denen es sich um eine Prüfsumme der Leistungskenndaten handelt,
ein Verlaufsvalidierungs- und Schlüsselrekonstruktionsmodul (16) zum Validieren der Leistungskenndaten und zum Rekonstruieren des Geräteschlüssels aus den eindeutigen Leistungskenndaten und den während der Registrierungsphase erzeugten Helferdaten und
eine Einrichtung zum Entschlüsseln von Software, die mit dem Geräteschlüssel verschlüsselt im Speicher (5) gespeichert ist, und zum Ausführen der entschlüsselten Software.

10. System auf einem Chip nach Anspruch 9, wobei die Prozessoreinheit (1) mit einem Systembus (2), einer Takt- und Rücksetzeinheit (3) und einer Speichersteuerung (4) verbunden ist.

11. System auf einem Chip nach Anspruch 9 oder 10, bei dem das Registrierungsmodul (14) im Anschluss an die Erzeugung der Helferdaten physikalisch deaktiviert wird.

## Revendications

1. Un procédé d'actionnement d'un système sur puce comprenant un processeur amorçable (10), le procédé comprenant les étapes suivantes :
l'exécution d'un programme d'amorçage et la mesure d'une énergie électrique consommée par le processeur (10) au cours de l'amorçage,
la conversion de l'énergie électrique mesurée en données numériques de trace d'énergie et la génération de données de caractéristiques d'énergie uniques à partir des données numériques de trace d'énergie,
la vérification des données de caractéristiques d'énergie uniques,
la reconstruction d'une clé de dispositif à partir des données de caractéristiques d'énergie uniques et des données d'aide, des données de caractéristiques d'énergie moyennées mesurées au cours d'une phase d'inscription (21) et la clé de dispositif fournie par un fabricant étant utilisées pour la génération des données d'aide au cours de la phase d'inscription (21), et
après la reconstruction de la clé de dispositif, le déchiffrement d'un logiciel, qui est chiffré avec la clé de dispositif et conservé dans une mémoire (5), et l'exécution du logiciel déchiffré.

2. Le procédé selon la revendication 1, dans lequel la vérification des données de caractéristiques d'énergie uniques est exécutée par la comparaison d'une somme de contrôle des données de caractéristiques d'énergie dérivées à une somme de contrôle générée au cours de l'inscription (21) du système sur puce.

3. Le procédé selon la revendication 2, dans lequel, en cas de falsification, un signal de réinitialisation est généré afin de réinitialiser le processeur (10).

4. Le procédé selon la revendication 3, dans lequel le programme d'amorçage est réexécuté après la réinitialisation du processeur (10) un nombre déterminé de répétitions.

5. Le procédé selon la revendication 4, dans lequel le système sur puce est bloqué après l'exécution du nombre déterminé de répétitions.

6. Le procédé selon la revendication 4 ou 5, dans lequel une alarme de sécurité est signalée après l'exécution du nombre déterminé de répétitions.

7. Le procédé selon l'une quelconque des revendications 4 à 6, dans lequel la mémoire (5) du système sur puce est effacée après l'exécution du nombre déterminé de répétitions.

8. Le procédé selon l'une quelconque des revendications 1 à 7, dans lequel, au cours de l'inscription (21) du système sur puce, l'amorçage est exécuté dans une boucle afin d'obtenir un nombre d'échantillons de l'énergie électrique mesurée consommée par le processeur (10).

9. Un système sur puce, qui est établi de façon à mettre en oeuvre le procédé selon l'une quelconque des revendications 1 à 8, avec une unité de processeur (1) comprenant :
un processeur (10) proprement dit,
un ADC (12) destiné à la conversion d'une trace d'énergie mesurée en données numériques,
un module de caractérisation d'énergie (13) destiné à la génération de données de caractéristiques d'énergie à partir des données numériques de trace d'énergie,
un module d'inscription (14) destiné à la génération de données d'aide au cours d'une phase d'inscription en fonction de données de caractéristiques d'énergie moyennées et d'une clé de dispositif fournie par un fabricant,
un espace mémoire (15) destiné à la conservation en mémoire de données d'aide et de données de validation, qui sont une somme de contrôle des données de caractéristiques d'énergie,
un module de validation de trace et de reconstruction de clé (16) destiné à la validation des données de caractéristiques d'énergie et à la reconstruction de la clé de dispositif à partir des données de caractéristiques d'énergie uniques et des données d'aide générées au cours de la phase d'inscription, et
un moyen de déchiffrement d'un logiciel conservé en mémoire sous forme chiffrée avec la clé de dispositif dans une mémoire (5) et d'exécution du logiciel déchiffré.

10. Le système sur puce selon la revendication 9, dans lequel l'unité de processeur (1) est raccordée à un bus système (2), une unité de réinitialisation et d'horloge (3) et un dispositif de commande de mémoire (4).

11. Le système sur puce selon la revendication 9 ou 10, dans lequel le module d'inscription (14) est physiquement désactivé suite à la génération des données d'aide.
